# EUROPÄISCHE PATENTSCHRIFT

(11) **EP 3 738 484 B1**
(45) Veröffentlichungstag und Bekanntmachung des Hinweises auf die Patenterteilung: **23.02.2022**
(21) Anmeldenummer: 20168654.0
(22) Anmeldetag: 08.04.2020
(51) Int. Cl.: A47J 31/44, A47J 31/52

(54) **ERKENNUNGSEINRICHTUNG FÜR EINEN GETRÄNKEAUTOMATEN MIT EINEM HÖHENVERSTELLBAREN AUSLAUF UND VERFAHREN DAZU**
DETECTION DEVICE FOR AN AUTOMATIC BEVERAGE VENDING MACHINE WITH A HEIGHT-ADJUSTABLE OUTLET AND METHOD FOR SAME
DISPOSITIF DE DÉTECTION POUR UN DISTRIBUTEUR AUTOMATIQUE DE BOISSONS DOTÉ D'UN ÉCOULEMENT RÉGLABLE EN HAUTEUR ET PROCÉDÉ ASSOCIÉ

(30) Priorität: 13.05.2019 DE 102019112448
(43) Veröffentlichungstag der Anmeldung: 18.11.2020
(73) Patentinhaber: Miele & Cie. KG, 33332 Gütersloh (DE)
(72) Erfinder: Tembaak, Jutta, 49492 Westerkappeln (DE)

(56) Entgegenhaltungen:
- EP-A1- 1 745 726
- DE-A1-102010 060 731
- DE-A1-102010 060 732
- DE-A1-102015 109 249

## Beschreibung

Die Erfindung betrifft eine Erkennungseinrichtung für einen Getränkeautomaten mit einem zumindest eine Auslaufdüse umfassenden höhenverstellbaren Auslauf, ein Verfahren zum Erkennen eines Gefäßes und eines Flüssigkeitsstrahls unter Verwendung einer Erkennungseinrichtung sowie einen Getränkeautomaten

Die DE10 2010 060 732 A1 beschreibt einen Getränkeautomaten mit einem motorisch höhenverstellbaren Auslauf und einer Erkennungseinrichtung zur Tassenranderkennung. Diese umfasst einen an der Unterseite des Auslaufs angebrachten Druckschalter, der beim Aufsetzen auf den Tassenrand das Absenken des Auslaufs stoppt. Ferner umfasst die Erkennungseinrichtung einen Infrarotsensor, der an einem Haltearm nach hinten versetzt am Getränkeauslauf angebracht ist, sodass dieser hinter einer Wand mitbewegt werden kann zur kontaktlosen Tassenranderkennung.

Die DE 10 2011 075 194 A1 beschreibt einen Getränkeautomaten und ein Getränkeabfüliverfahren.

Die Erfindung stellt sich vor diesem Hintergrund die Aufgabe, eine verbesserte Erkennungseinrichtung für einen Getränkeautomaten mit einem zumindest eine Auslaufdüse umfassenden höhenverstellbaren Auslauf, ein verbessertes Verfahren zum Erkennen eines Gefäßes und eines Flüssigkeitsstrahls unter Verwendung einer Erkennungseinrichtung sowie einen verbesserten Getränkeautomaten zu schaffen.

Erfindungsgemäß wird diese Aufgabe durch eine Erkennungseinrichtung für einen Getränkeautomaten mit einem zumindest eine Auslaufdüse umfassenden höhenverstellbaren Auslauf, ein Verfahren zum Erkennen eines Gefäßes und eines Flüssigkeitsstrahls unter Verwendung einer Erkennungseinrichtung sowie einen Getränkeautomaten mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer verbesserten Hygiene besonders im Reduzieren von Fertigungskosten.

Vor diesem Hintergrund wird eine Erkennungseinrichtung für einen Getränkeautomaten mit einem zumindest eine Auslaufdüse umfassenden höhenverstellbaren Auslauf vorgestellt. Die Erkennungseinrichtung weist dabei ein an dem Auslauf befestigbares Kontaktelement zum Sensieren einer Berührung mit einem Gefäß sowie einen an dem Kontaktelement angeordneten Abstandsensor zum berührungslosen Bereitstellen eines Abstandsignals auf.

Die Erkennungseinrichtung ist in einem Getränkeautomaten, wie beispielsweise einem Kaffeevollautomaten realisierbar, der über den Auslauf ein zubereitetes Getränk ausgeben kann. Der Getränkeautomat kann beispielsweise als ein Haushaltgerät, aber auch für gewerbliche Zwecke realisiert sein. Das Getränk kann ein Heißgetränk, wie beispielsweise ein Kaffeegetränk, sein, das über den Auslauf ausgegeben wird. Der Auslauf kann beispielsweise eine, aber auch mehrere Auslaufdüsen aufweisen, über die das Getränk in das Gefäß ausgegeben wird. Das Gefäß kann beispielsweise als Tasse, aber auch als Glas oder Becher realisiert sein. Das Kontaktelement kann beispielsweise an einer der Auslaufdüse zugewandten Seite des Auslaufs angeordnet sein, sodass das Kontaktelement bei einer Berührung mit dem Gefäßrand beispielsweise ein Stoppsignal zum Stoppen des Auslaufs bereitstellt. Der Abstandsensor kann an dem Kontaktelement angeordnet sein. Der Abstandssensor ist beispielsweise ausgebildet, um einen Messstrahl auszusenden. Das Abstandssignal kann einen Abstand zwischen dem Abstandsensor und einem Reflektionspunkt anzeigen, an dem der Messstrahl reflektiert wird. Je nach Ausrichtung des Messstrahls kann der Messstrahl beispielsweise an einem Gefäß oder an einem Flüssigkeitsstrahl reflektiert werden. So kann das Abstandssignal beispielsweise einen Abstand zu dem Gefäß oder das Vorhandensein eines Flüssigkeitsstrahls anzeigen. Vorteilhafterweise kann einem Kunden durch das berührungslose Sensieren des Gefäßes die Sicherheit vermittelt werden, dass beispielsweise das Gefäß von dem automatisch höhenverstellbaren Auslauf nicht umgestoßen wird.

Gemäß einer Ausführungsform kann der Abstandsensor ausgebildet sein, um einen Messstrahl auszusenden und eine Reflektion des Messstrahls zu empfangen. Weiterhin kann der Abstandsensor ausgebildet sein, um das Abstandsignal aus einer Laufzeit des Messstrahl zu bestimmen. Der Messstrahl kann beispielsweise ein Lichtstrahl oder eine Schallwelle sein. Vorteilhafterweise kann auf diese Weise eine Abstandsmessung sehr einfach durchgeführt werden.

Gemäß einer Ausführungsform kann der Abstandsensor ausgebildet sein, um den Messstrahl schräg zu einer durch die Auslaufdüse verlaufende Längsachse auszusenden. Optional kann der Messstrahl die Längsachse schneiden. Die Längsachse kann beispielsweise im betriebsbereiten Zustand eines Getränkeautomaten, an dem die Erkennungseinrichtung verbaut ist, in Fließrichtung einer Flüssigkeit verlaufen. Das bedeutet, dass ein aus der Auslaufdüse ausgehender Flüssigkeitsstrahl auf der Längsachse verlaufen kann. Vorteilhafterweise kann der Abstandsensor auf diese Weise sicher erkennen, ob das Gefäß sich unter dem Auslauf befindet. Wenn der Messstrahl die Längsachse schneidet kann zudem erkannt werden, ob ein Flüssigkeitsstrahl vorhanden ist.

Weiterhin kann der Abstandsensor ausgebildet sein, um gemäß einer Ausführungsform den Messstrahl mit einem Winkel zwischen 7° bis 16° gegenüber einer Waagerechten auszusenden. In Bezug auf die genannte Längsachse kann der Abstandsensor ausgebildet sein, um gemäß einer Ausführungsform den Messstrahl mit einem Winkel zwischen 74° und 83° der durch die Auslaufdüse verlaufenden Längsachse auszusenden. Gemäß dieser Ausführungsform kann die Waagerechte senkrecht zu der Längsachse ausgerichtet sein.

Durch die Neigung des Abstandsensors kann der Messstrahl im Falle eines vorhandenen Gefäßes einen Gefäßrand des Gefäßes treffen.

Gemäß einer Ausführungsform kann das Kontaktelement als Wippe ausgeformt sein. Das Kontaktelement ist ausgeformt, um bei einem Kontakt mit dem Gefäßrand ein Signal bereitzustellen, um den Auslauf nach erfolgten Kontakt beispielsweise zumindest ein Stück weit hinaufzufahren zu können. Vorteilhafterweise kann dadurch ein Umkippen oder Einklemmen des Gefäßes unter dem Auslauf verhindert werden.

Der Abstandsensor kann eine geeignete Sensorik umfassen, und beispielsweise als optischer Sensor, wie Infrarotsensor oder als Ultraschallsensor oder als Radarsensor ausgeformt sein. Vorteilhafterweise kann dadurch das Gefäß oder der Flüssigkeitsstrahl unter Verwendung der genannten Sensoren und die dazu vorgesehenen Auswertungsverfahren berührungslos erkannt werden.

Gemäß einer Ausführungsform kann die Erkennungseinrichtung eine Auswerteeinrichtung aufweisen, die ausgebildet ist, um einen Vergleich zwischen einem durch das Abstandssignal repräsentierten Abstandswert und einem Schwellenwert durchzuführen, und um abhängig von einem Ergebnis des Vergleichs ein Gefäßsignal bereitzustellen, das ein Vorhandensein eines Gefäßes anzeigen kann. Der Schwellenwert kann dabei beispielsweise einen Abstand zwischen dem Abstandsensor und der Längsachse repräsentieren. Die Auswerteeinrichtung stellt dabei das Gefäßsignal bereit, wenn das Gefäß erkannt wurde. Das bedeutet beispielsweise dann, wenn der Abstandswert kleiner als der Schwellenwert ist. Vorteilhafterweise kann dadurch im Falle des Vorhandenseins des Gefäßes eine Bewegung des Auslaufs gestoppt werden, bevor der Kontaktsensor auf den Gefäßrand trifft.

Die Auswerteeinrichtung kann gemäß einer Ausführungsform ausgebildet sein, um abhängig von einem Ergebnis des Vergleichs ein Auslaufsignal bereitzustellen, das einen von der Auslaufdüse ausgelassenen Flüssigkeitsstrahl anzeigt. Das bedeutet, dass der Flüssigkeitsstrahl angezeigt wird, wenn der Abstandswert gleich dem Schwellenwert ist. Vorteilhafterweise kann dies genutzt werden, um den Auslauf daraufhin weiter herunterzufahren, da beispielsweise ein kleineres Gefäß befüllt werden soll.

Weiterhin kann die Auswerteeinrichtung ausgebildet sein, um gemäß einer Ausführungsform unter Verwendung des Auslaufsignals ein Mengensignal zu bestimmen, das eine Menge der über den Flüssigkeitsstrahl abgegebenen Flüssigkeit repräsentieren kann. Die Flüssigkeit kann beispielsweise ein Kaffeegetränk sein. Das Mengensignal wird bestimmt, wenn beispielsweise der Abstandswert gleich dem Schwellenwert ist. Vorteilhafterweise kann dadurch ein Überlaufen des Gefäßes verhindert werden, da die Menge der Flüssigkeit dadurch präzise bestimmbar ist.

Gemäß einer Ausführungsform kann die Erkennungseinrichtung einen an dem Kontaktelement angeordneten weiteren Abstandsensor zum berührungslosen Bereitstellen eines weiteren Abstandsignals aufweisen, wobei der Abstandssensor und der weitere Abstandssensor an einander gegenüberliegenden Enden des Kontaktelements angeordnet sein können. Vorteilhafterweise kann dadurch zeitgleich ein weiteres Getränk über den Auslauf ausgegeben werden und dabei ein weiteres Gefäß erkannt und/oder ein weiterer Flüssigkeitsstrahl erfasst werden.

Ferner wird ein Getränkeautomat vorgestellt, der einen höhenverstellbaren Auslauf mit zumindest einer Auslaufdüse zum Ausgeben einer Flüssigkeit und eine an dem Auslauf angeordnete Erkennungseinrichtung in einer der zuvor genannten Varianten aufweist.

Der Getränkeautomat kann beispielsweise als ein Kaffeevollautomat realisiert sein. Der höhenverstellbare Auslauf ist ausgeformt, um die Flüssigkeit in Form eines zubereiteten Getränks über die zumindest eine Auslaufdüse in das Gefäß auszugeben. Vorteilhafterweise kann ein Nutzer beispielsweise ein Heißgetränk beziehen.

Ferner wird ein Verfahren zum Erkennen eines Gefäßes und eines Flüssigkeitsstrahls unter Verwendung einer Erkennungseinrichtung in einer der zuvor genannten Varianten vorgestellt, das einen Schritt des Aussendens, einen Schritt des Durchführens und einen Schritt des Bereitstellens umfasst. Im Schritt des Aussendens wird ein Messstrahl ausgesandt, eine Reflektion des Messstrahls empfangen und ein Abstandsignal aus einer Laufzeit des Messstrahls unter Verwendung des Abstandssensors bestimmt. Im Schritt des Durchführens wird ein Vergleich zwischen einem durch das Abstandssignal repräsentierten Abstandswert und einem Schwellenwert durchgeführt. Im Schritt des Bereitstellens wird ein Gefäßsignal, das ein Vorhandensein eines Gefäßes anzeigt, und zusätzlich oder alternativ ein Auslaufsignal, das einen von der Auslaufdüse ausgelassenen Flüssigkeitsstrahl anzeigt, abhängig von einem Ergebnis des Vergleichs bereitgestellt.

Das Verfahren kann gemäß einer Ausführungsform in einem Getränkeautomaten Anwendung finden, wie er zuvor vorgestellt wurde. Der Messstrahl kann beispielsweise als ein Lichtstrahl realisiert sein. Der Abstandswert repräsentiert dem entsprechend einem durch den Messstrahl gemessenen Wert. Vorteilhafterweise kann durch das Verfahren ein Absenken des Auslaufs gestoppt werden, wenn das Gefäß erkannt wurde.

Auch wenn der beschriebene Ansatz anhand eines Haushaltgerät beschrieben wird, kann der hier beschriebene Ansatz entsprechend im Zusammenhang mit einem gewerblichen oder professionellen Gerät, beispielsweise im gastronomischen Bereich, eingesetzt werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine Darstellung eines Getränkeautomaten gemäß einem Ausführungsbeispiel;
- Figur 2: eine Darstellung eines höhenverstellbaren Auslaufs mit einer Erkennungseinrichtung gemäß einem Ausführungsbeispiel;
- Figur 3: eine Seitendarstellung eines höhenverstellbaren Auslaufs mit einer Erkennungseinrichtung gemäß einem Ausführungsbeispiel; und
- Figur 4: ein Ablaufdiagramm eines Verfahrens zum Erkennen eines Gefäßes und eines Flüssigkeitsstrahls unter Verwendung einer Erkennungseinrichtung gemäß einem Ausführungsbeispiel.

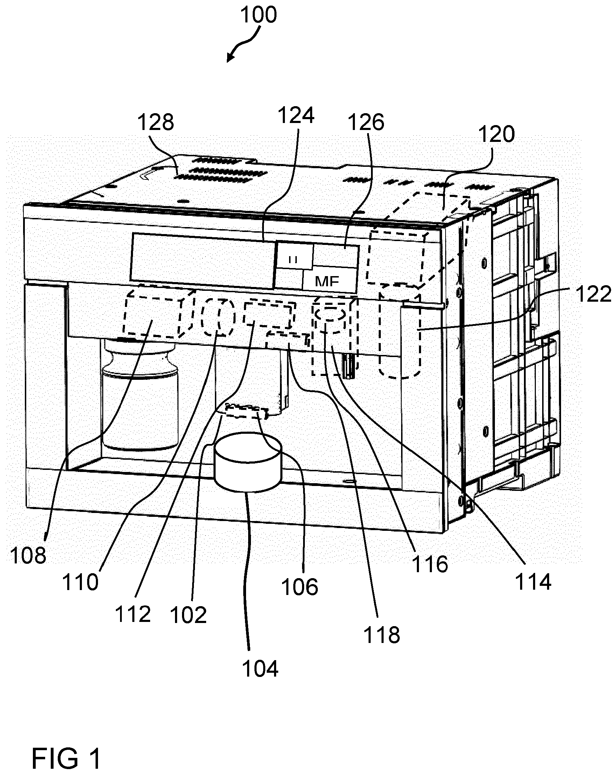

Figur 1 zeigt eine Darstellung eines Getränkeautomaten 100 gemäß einem Ausführungsbeispiel. Der Getränkeautomat 100, der auch als Getränkebereiter bezeichnet werden kann, ist beispielsweise als ein Kaffeevollautomat realisiert. Der Getränkeautomat 100 ist dabei ausgeformt, um Getränke, wie beispielsweise Heißgetränke zuzubereiten und über eine an einem höhenverstellbaren Auslauf 102 angeordnete Auslaufdüse in ein Gefäß 104 auszugeben. Gemäß diesem Ausführungsbeispiel weist der Getränkeautomat 100 weiterhin eine Erkennungseinrichtung 106 auf, die ausgeformt ist, um das Gefäß 104 unter dem Auslauf 102 zu erkennen. Die Erkennungseinrichtung 106 kann auch als Sensorvorrichtung bezeichnet werden und ist gemäß diesem Ausführungsbeispiel an einem dem Gefäß 104 zugewandten Ende des Auslaufs 102 angeordnet. Die Erkennungseinrichtung 106 weist dabei ein Kontaktelement zum Sensieren einer Berührung mit dem Gefäß 104 und einen an dem Kontaktelement angeordneten Abstandsensor auf, um berührungslos ein Abstandsignal bereitzustellen, das beispielsweise einen Abstand zu dem Gefäß 104 anzeigt. Die Erkennungseinrichtung 106 ist gemäß diesem Ausführungsbeispiel somit ausgebildet, um ein Vorhandensein des Gefäßes 104 zu detektieren. Das Abstandsignal kann beispielsweise verwendet werden, um den Auslauf 102 anzuhalten, sofern dieser herabfährt und das Abstandsignal einen Abstand anzeigt, der kleiner als ein vorbestimmter Schwellenwert ist. Im Falle eines Nicht-Erkennens des Gefäßes 104 durch den Abstandsensor kann der Auslauf 102 so lange hinabfahren, bis das Kontaktelement die Berührung mit dem Gefäß 104 erkennt. Auf diese Weise kann vermieden werden, dass das Gefäß 104 durch den Auslauf 102 umgestoßen wird, falls keine berührungslose Erkennung des Gefäßes 104 erfolgt ist.

Ferner weist der Getränkeautomat 100 einen Flüssigkeitsbehälter 108 für beispielsweise eine Wasserversorgung, eine Pumpe 110, eine Heizeinrichtung 112, die auch als Wassererhitzer bezeichnet wird, eine Brüheinheit 114 mit einer Brühkammer 116 und schließlich eine Ventilvorrichtung 118 auf. Der Getränkeautomat 100 weist weiterhin einen Vorratsbehälter 120 auf, der ausgeformt ist, um beispielsweise Kaffeebohnen aufzunehmen, bevor diese von einem Mahlwerk 122 gemahlen werden. Um das Getränk zuzubereiten, durchläuft eine Flüssigkeit, wie beispielsweise Wasser, den Flüssigkeitsbehälter 108, die Pumpe 110, die Heizeinrichtung 112, die Brüheinheit 114 und die Ventilvorrichtung 118, bis das Getränk über den Auslauf 102 ausgegeben wird.

Um beispielsweise ein Getränk beziehen zu können, weist der Getränkeautomat 100 eine Anzeigeeinrichtung 124 auf, die als berührungssensitives Display ausgeformt sein kann. Über die Anzeigeeinrichtung 124 kann der Nutzer beispielsweise sein Wunschgetränk auswählen. Der Getränkeautomat 100 weist dabei ein Steuergerät 126 auf, um Signale, wie beispielsweise von der Anzeigeeinrichtung 124 ausgehende Signale, einzulesen und um Signale an weitere Komponenten des Getränkeautomaten 100 bereitzustellen. Um einen Innenraum des Getränkeautomaten 100 vor beispielsweise äußeren Einflüssen zu schützen, weist der Getränkeautomat 100 ein Gehäuse 128 auf.

Ein solcher Getränkeautomat 100 ist beispielsweise als handelsübliches Haushaltgerät, aber auch für gewerbliche Zwecke einsetzbar. Weiterhin ist in dem Getränkeautomaten 100 ein Verfahren zum Erkennen des Gefäßes 104 und eines Flüssigkeitsstrahls unter Verwendung der Erkennungseinrichtung 106 durchführbar.

Die Erkennungseinrichtung 106 ermöglicht eine Tassenranderkennung mit gleichzeitiger Tassenschutzabschaltung, die eine kostengünstige, hygienische sowie eine sichere Lösung bietet. Damit der Auslauf 102 nicht ungestoppt auf das Gefäß 104 fährt und das Gefäß 104 folglich umkippt, falls der Abstandsensor beispielsweise aufgrund einer Verschmutzung nicht funktioniert, ist der Abstandsensor in das Kontaktelement verbaut. Fährt der Auslauf 102 herunter und der Abstandsensor erkennt das Gefäß 104, stoppt der Auslauf 102. Wird das Gefäß 104 nicht erkannt, stoppt der Auslauf 102 gesteuert durch das Kontaktelement.

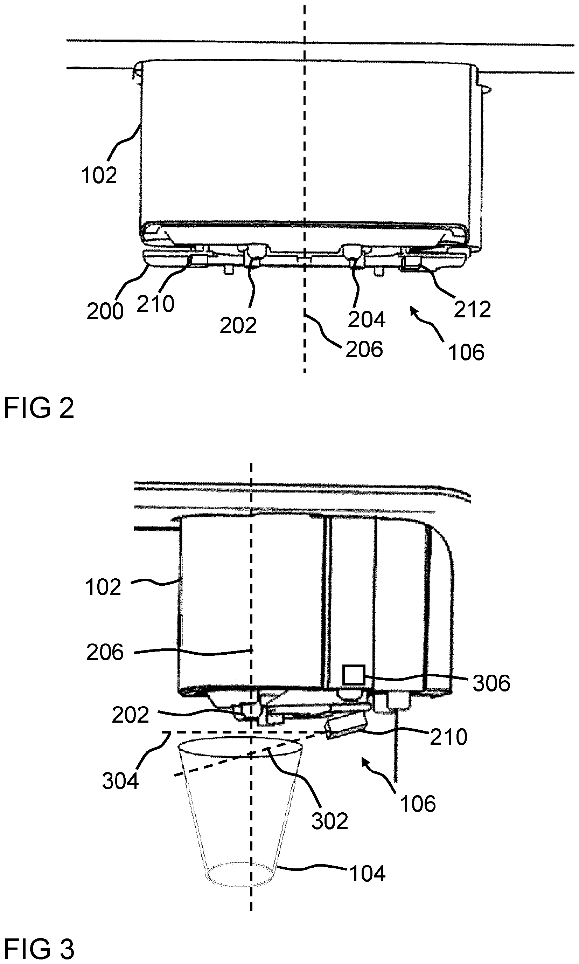

Figur 2 zeigt eine Darstellung eines höhenverstellbaren Auslaufs 102 mit einer Erkennungseinrichtung 106 gemäß einem Ausführungsbeispiel. Sowohl der Auslauf 102 als auch die Erkennungseinrichtung 106 sind gemäß diesem Ausführungsbeispiel in einem Getränkeautomaten realisierbar, wie er in Figur 1 beschrieben wurde.

Gemäß diesem Ausführungsbeispiel ist ein Kontaktelement 200 sichtbar, das sich beispielsweise über eine gesamte Breite des Auslaufs 102 erstreckt und beispielsweise als Wippe realisiert ist. Gemäß diesem Ausführungsbeispiel ist zumindest eine Auslaufdüse 202 sowie eine optionale weitere Auslaufdüse 204 realisiert, die parallel zu einer Längsachse 206 und somit zugleich parallel zu einer Fließrichtung eines Flüssigkeitsstrahls angeordnet sind, die gemäß diesem Ausführungsbeispiel mittig durch den Auslauf 102 verläuft. Alternativ kann die Längsachse 206 gemäß einem Ausführungsbeispiel durch die Auslaufdüse 202 oder die weitere Auslaufdüse 204 verlaufen, wie es beispielsweise in Figur 3 gezeigt ist.

An dem Kontaktelement 200 ist zumindest ein Abstandssensor 210 angeordnet, wie er beispielsweise anhand von Figur 1 beschrieben ist. Gemäß dem gezeigten Ausführungsbeispiel sind zwei Abstandssensoren 210, 212 an dem Kontaktelement 200 angeordnet. Dabei ist der erste Abstandssensor 210 der Auslaufdüse 202 und der weitere Abstandssensor 212 der weiteren Auslaufdüse 204 zugeordnet. Das Kontaktelement 200 ist aus Sicht eines Nutzers hinter den Auslaufdüsen 202, 204 angeordnet. Entsprechend sind die Abstandssensoren 210, 212 aus Sicht des Nutzers ebenfalls hinter den Auslaufdüsen 202, 204 angeordnet. Ein Abstand zwischen den Abstandssensoren 210, 212 ist beispielhaft größer als ein Abstand zwischen den Auslaufdüsen 202, 204.

Figur 3 zeigt eine Seitendarstellung eines höhenverstellbaren Auslaufs 102 mit einer Erkennungseinrichtung 106 gemäß einem Ausführungsbeispiel. Der Auslauf 102 kann dem in Figur 2 beschriebenen Auslauf 102 entsprechen und ist dem entsprechend in einem Getränkeautomaten einsetzbar, wie er in Figur 1 beschrieben wurde. Der Abstandsensor 210 ist ausgebildet, einen Messstrahl 302 auszusenden und eine Reflektion des Messstrahl 302 zu empfangen. Gemäß diesem Ausführungsbeispiel wird der Messstrahl 302 entweder an dem Gefäß 104 oder von einem aus der Auslaufdüse 202 austretenden Flüssigkeitsstrahl reflektiert. Die Längsachse 206 verläuft gemäß diesem Ausführungsbeispiel durch die Auslaufdüse 202. Wenn der Messstrahl 302 so ausgesendet wird, dass er die Längsachse 206 schneidet, kann ein aus der Auslaufdüse 202 austretender Flüssigkeitsstrahl unter Verwendung des Messstrahls 302 erkannt werden. Der Abstandssensor 210 ist ausgebildet, um ein Abstandsignal bereitzustellen, dass eine Laufzeit des Messstrahls 302 zwischen dem Aussenden des Messstrahls 302 und einem Empfangen eines reflektierten Anteils des Messstrahls 302 durch den Abstandssensor 210 repräsentiert oder bereits einen daraus bestimmten Abstand zwischen dem Abstandssensor 210 und einem Reflektionspunkt oder bereits einen daraus bestimmten Abstand zwischen dem Auslauf und dem Gefäß 104 repräsentiert.

Gemäß diesem Ausführungsbeispiel ist der Abstandsensor 210 ausgebildet, um den Messstrahl 302 schräg, beispielsweise mit einem Winkel zwischen 5° und 20°, bevorzugt mit einem Winkel zwischen 8° und 15° gegenüber der Horizontalen 304 auszusenden. Gemäß einem Ausführungsbeispiel schneit der Messstrahl 302 dabei die Längsachse 206. Der Abstandsensor 210 ist beispielsweise als ein Infrarotsensor, Ultraschallsensor oder als Radarsensor ausgeformt.

Gemäß diesem Ausführungsbeispiel ist weiterhin eine Auswerteeinrichtung 306 realisiert, die ausgebildet ist, um das von dem Abstandssensor 210 bereitgestellte Abstandssignal zu empfangen. Die Auswerteeinrichtung 306 ist beispielsweise ausgebildet, um einen Vergleich zwischen einem durch das Abstandssignal repräsentierten Abstandswert und einem Schwellenwert durchzuführen. Der Schwellenwert entspricht dabei gemäß diesem Ausführungsbeispiel einem Abstandswert zwischen dem Abstandsensor 210 und der Längsachse 206. Die Auswerteeinrichtung 306 ist beispielsweise über den Auslauf 102 an eine Elektronik des Getränkeautomaten angeschlossen. Weiterhin ist die Auswerteeinrichtung 306 beispielsweise ausgebildet, um abhängig von einem Ergebnis des Vergleichs ein Gefäßsignal, das ein Vorhandensein des Gefäßes 104 anzeigt, und/oder ein Auslaufsignal bereitzustellen, das einen von der Auslaufdüse ausgelassenen Flüssigkeitsstrahl anzeigt. Unter Verwendung des Auslaufsignals bestimmt die Auswerteeinrichtung gemäß diesem Ausführungsbeispiel ein Mengensignal, das eine Menge der über den Flüssigkeitsstrahl abgegebenen Flüssigkeit, das bedeutet des Getränks, repräsentiert.

Analog zu dem in Figur 2 beschriebenen Auslauf 102, der neben der Auslaufdüse 202 auch die weitere Auslaufdüse aufweist, weist der Auslauf 102 ebenfalls neben dem Abstandsensor 210 gemäß einem Ausführungsbeispiel einen weiteren Abstandsensor auf. Dabei sind der Abstandsensor 210 und der weitere Abstandsensor gemäß einem Ausführungsbeispiel an einander gegenüberliegenden Enden des Kontaktelements angeordnet.

In anderen Worten liefert der Abstandsensor 210 als Datum nur eine Länge oder den Abstandswert. Der Messstrahl 302 ist weiterhin von dem Kontaktelement ausgehend etwa 7° bis 16° bezüglich einer Horizontalen 304 geneigt und beabstandet zu der Auslassdüse 202 platziert. Dabei ist der Messstrahl 304 in Richtung der Auslassdüse 202 gerichtet und erfasst auch den Flüssigkeitsstrahl, der aus der Auslassdüse 202 herausläuft. Dadurch kann auch die Flüssigkeitsmenge exakter bestimmt werden, als beispielsweise mit einem Flowmeter in einem Frischwasserzulauf. Dadurch lässt sich ein doppelter Nutzen mit einem einzigen (einfachen) Abstandssensor 210 erreichen.

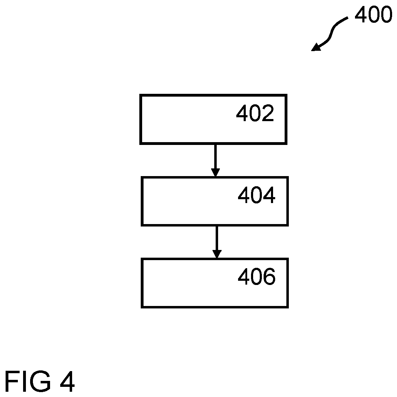

Figur 4 zeigt ein Ablaufdiagramm eines Verfahrens 400 zum Erkennen eines Gefäßes und eines Flüssigkeitsstrahls unter Verwendung einer Erkennungseinrichtung gemäß einem Ausführungsbeispiel. Das Verfahren 400 ist dabei in einem Getränkeautomaten mit einer Erkennungseinrichtung durchführbar, wie sie in den Figuren 1 bis 3 beschrieben wurden. Das Verfahren 400 umfasst dabei einen Schritt 402 des Aussendens, einen Schritt 404 des Durchführens sowie einen Schritt 406 des Bereitstellens. Im Schritt 402 des Aussendens wird gemäß diesem Ausführungsbeispiel ein Messstrahl ausgesandt, ein reflektierter Anteil des Messstrahls empfangen und aus einer Laufzeit des Messstrahls unter Verwendung des Abstandsensors ein Abstandsignal bestimmt. Im Schritt 404 des Durchführens wird gemäß diesem Ausführungsbeispiel ein Vergleich zwischen einem Abstandswert, der von dem Abstandsignal repräsentiert wird, und einem Schwellenwert durchgeführt. Im Schritt 406 des Bereitstellens wird abhängig von einem Ergebnis des Vergleichs ein Gefäßsignal, das ein Vorhandensein eines Gefäßes anzeigt, oder ein Auslaufsignal bereitgestellt, das einen von der Auslaufdüse ausgelassenen Flüssigkeitsstrahl anzeigt.

## Patentansprüche

1. Erkennungseinrichtung (106) für einen Getränkeautomaten (100) mit einem zumindest eine Auslaufdüse (202) umfassenden höhenverstellbaren Auslauf (102), wobei die Erkennungseinrichtung (106) die folgenden Merkmale aufweist:
ein an dem Auslauf (102) befestigtes Kontaktelement (200) zum Sensieren einer Berührung mit einem Gefäß (104),
**gekennzeichnet durch**
einen an dem Kontaktelement (200) angeordneten Abstandssensor (210) zum
berührungslosen Bereitstellen eines Abstandssignals.

2. Erkennungseinrichtung (106) gemäß Anspruch 1, wobei der Abstandssensor (210) ausgebildet ist, um einen Messstrahl (302) auszusenden und eine Reflektion des Messstrahls (302) zu empfangen und ausgebildet ist, um ein Abstandssignal aus einer Laufzeit des Messstrahls (302) zu bestimmen.

3. Erkennungseinrichtung (106) gemäß Anspruch 2, wobei der Abstandssensor (210) ausgebildet ist, um den Messstrahl (302) schräg zu einer durch die Auslaufdüse (202) verlaufende Längsachse (206) auszusenden, wobei der Messstrahl (302) die Längsachse (206) schneidet.

4. Erkennungseinrichtung (106) gemäß Anspruch 2 oder 3, wobei der Abstandssensor (210) ausgebildet ist, um den Messstrahl (302) mit einem Winkel zwischen 74° und 83° zu einer durch die Auslaufdüse (202) verlaufende Längsachse (206) auszusenden.

5. Erkennungseinrichtung (106) gemäß einem der vorangegangenen Ansprüche, wobei das Kontaktelement (200) als Wippe ausgeformt ist.

6. Erkennungseinrichtung (106) gemäß einem der vorangegangenen Ansprüche, wobei der Abstandssensor (210) als optischer Sensor, wie Infrarotsensor oder als Ultraschallsensor oder als Radarsensor ausgeformt ist.

7. Erkennungseinrichtung (106) gemäß einem der vorangegangenen Ansprüche, mit einer Auswerteeinrichtung (306), die ausgebildet ist, um einen Vergleich zwischen einem durch das Abstandssignal repräsentierten Abstandswert und einem Schwellenwert durchzuführen, und ausgebildet ist, um abhängig von einem Ergebnis des Vergleichs ein Gefäßsignal bereitzustellen, das ein Vorhandensein eines Gefäßes (104) anzeigt.

8. Erkennungseinrichtung (106) gemäß Anspruch 7, wobei die Auswerteeinrichtung (306) ausgebildet ist, um ein abhängig von einem Ergebnis des Vergleichs ein Auslaufsignal bereitzustellen, das einen von der Auslaufdüse (202) ausgelassenen Flüssigkeitsstrahl anzeigt.

9. Erkennungseinrichtung (106) gemäß Anspruch 8, wobei die Auswerteeinrichtung (306) ausgebildet ist, um unter Verwendung des Auslaufsignals ein Mengensignal zu bestimmen, das eine Menge der über den Flüssigkeitsstrahl abgegebenen Flüssigkeit repräsentiert.

10. Erkennungseinrichtung (106) gemäß einem der vorangegangenen Ansprüche, mit einem an dem Kontaktelement (200) angeordneten weiteren Abstandssensor (212) zum berührungslosen Bereitstellen eines weiteren Abstandssignals, wobei der Abstandssensor (210) und der weitere Abstandssensor (212) an einander gegenüberliegenden Enden des Kontaktelements (200) angeordnet sind.

11. Getränkeautomat (100), der die folgenden Merkmale aufweist:
einen höhenverstellbaren Auslauf (102) mit zumindest einer Auslaufdüse (202) zum Ausgeben einer Flüssigkeit; und
einer an dem Auslauf (102) angeordnete Erkennungseinrichtung (106) gemäß einem der vorangegangenen Ansprüche.

12. Verfahren (400) zum Erkennen eines Gefäßes (104) und eines Flüssigkeitsstrahls unter Verwendung einer Erkennungseinrichtung (106) gemäß einem der vorangegangenen Ansprüche 1-10, wobei das Verfahren (400) die folgenden Schritte umfasst:
Aussenden (402) eines Messstrahls (302), Empfangen einer Reflektion des Messstrahls (302) und Bestimmen eines Abstandssignals aus einer Laufzeit des Messstrahls (302) unter
Verwendung des Abstandssensors (210);
Durchführen (404) eines Vergleichs zwischen einem durch das Abstandssignal repräsentierten Abstandswert und einem Schwellenwert; und
Bereitstellen (406) eines Gefäßsignals, das ein Vorhandensein eines Gefäßes (104) anzeigt, und/oder eines Auslaufsignals, das einen von der Auslaufdüse (202) ausgelassenen Flüssigkeitsstrahl anzeigt, abhängig von einem Ergebnis des Vergleichs.

## Claims

1. Detection device (106) for a beverage machine (100) which has a height-adjustable outlet (102) comprising at least one outlet nozzle (202), the detection device (106) having the following features:
a contact element (200) fastened to the outlet (102) for sensing contact with a vessel (104),
**characterised by** a distance sensor (210) arranged on the contact element (200) for contactlessly providing a distance signal.

2. Detection device (106) according to claim 1, wherein the distance sensor (210) is designed to emit a measurement beam (302) and to receive a reflection of the measurement beam (302) and is designed to determine a distance signal from a delay time of the measurement beam (302).

3. Detection device (106) according to claim 2, wherein the distance sensor (210) is designed to emit the measurement beam (302) obliquely to a longitudinal axis (206) extending through the outlet nozzle (202), wherein the measurement beam (302) intersects the longitudinal axis (206).

4. Detection device (106) according to either claim 2 or claim 3, wherein the distance sensor (210) is designed to emit the measurement beam (302) at an angle between 74° and 83° with respect to a longitudinal axis (206) extending through the outlet nozzle (202).

5. Detection device (106) according to any of the preceding claims, wherein the contact element (200) is in the form of a rocker.

6. Detection device (106) according to any of the preceding claims, wherein the distance sensor (210) is designed as an optical sensor such as an infrared sensor or as an ultrasonic sensor or as a radar sensor.

7. Detection device (106) according to any of the preceding claims, comprising an evaluation device (306) which is designed to compare a distance value represented by the distance signal and a threshold value and is designed to provide, on the basis of a result of the comparison, a vessel signal that indicates the presence of a vessel (104).

8. Detection device (106) according to claim 7, wherein the evaluation device (306) is designed to provide, on the basis of a result of the comparison, an outlet signal which indicates a jet of liquid discharged from the outlet nozzle (202).

9. Detection device (106) according to claim 8, wherein the evaluation device (306) is designed to use the outlet signal to determine an amount signal which represents an amount of the liquid dispensed via the jet of liquid.

10. Detection device (106) according to any of the preceding claims, comprising a further distance sensor (212) arranged on the contact element (200) for contactlessly providing a further distance signal, wherein the distance sensor (210) and the further distance sensor (212) are arranged at opposite ends of the contact element (200).

11. Beverage machine (100) which has the following features:
a height-adjustable outlet (102) comprising at least one outlet nozzle (202) for dispensing a liquid; and
a detection device (106) according to any of the preceding claims arranged at the outlet (102).

12. Method (400) for detecting a vessel (104) and a jet of liquid by using a detection device (106) according to any of the preceding claims 1-10, wherein the method (400) comprises the following steps:
emitting (402) a measurement beam (302), receiving a reflection of the measurement beam (302) and determining a distance signal from a delay time of the measurement beam (302) using the distance sensor (210);
comparing (404) a distance value represented by the distance signal and a threshold value; and providing (406), on the basis of a result of the comparison, a vessel signal which indicates the presence of a vessel (104) and/or an outlet signal which indicates a jet of liquid discharged from the outlet nozzle (202).

## Revendications

1. Dispositif de détection (106) pour distributeur de boissons automatique (100) comportant une sortie (102) réglable en hauteur et comprenant au moins une buse de sortie (202), le dispositif de détection (106) présentant les caractéristiques suivantes :
un élément de contact (200) fixé à la sortie (102) et permettant de détecter un contact avec un récipient (104),
**caractérisé par**
un capteur de distance (210) disposé sur l'élément de contact (200) et permettant de fournir un signal de distance sans contact.

2. Dispositif de détection (106) selon la revendication 1, dans lequel le capteur de distance (210) est configuré pour émettre un faisceau de mesure (302) et pour recevoir une réflexion du faisceau de mesure (302) et est configuré pour déterminer un signal de distance à partir d'une durée de fonctionnement du faisceau de mesure (302).

3. Dispositif de détection (106) selon la revendication 2, dans lequel le capteur de distance (210) est configuré pour émettre le faisceau de mesure (302) obliquement par rapport à un axe longitudinal (206) s'étendant à travers la buse de sortie (202), le faisceau de mesure (302) coupant l'axe longitudinal (206).

4. Dispositif de détection (106) selon la revendication 2 ou 3, dans lequel le capteur de distance (210) est configuré pour émettre le faisceau de mesure (302) selon un angle compris entre 74° et 83° par rapport à un axe longitudinal (206) s'étendant à travers la buse de sortie (202).

5. Dispositif de détection (106) selon l'une des revendications précédentes, dans lequel l'élément de contact (200) est formé en tant que bascule.

6. Dispositif de détection (106) selon l'une des revendications précédentes, dans lequel le capteur de distance (210) est formé en tant que capteur optique, tel qu'un capteur infrarouge ou en tant que capteur à ultrasons ou en tant que capteur radar.

7. Dispositif de détection (106) selon l'une des revendications précédentes, comportant un dispositif d'évaluation (306) qui est configuré pour mettre en œuvre une comparaison entre une valeur de distance représentée par le signal de distance et une valeur seuil, et est configuré pour fournir un signal de récipient indiquant la présence d'un récipient (104) en fonction d'un résultat de la comparaison.

8. Dispositif de détection (106) selon la revendication 7, dans lequel le dispositif d'évaluation (306) est configuré pour fournir un signal de sortie, indiquant un jet de liquide déchargé de la buse de sortie (202), en fonction d'un résultat de la comparaison.

9. Dispositif de détection (106) selon la revendication 8, dans lequel le dispositif d'évaluation (306) est configuré pour déterminer, à l'aide du signal de sortie, un signal de quantité représentant une quantité du liquide distribué par l'intermédiaire du jet de liquide.

10. Dispositif de détection (106) selon l'une des revendications précédentes, comportant un autre capteur de distance (212) disposé sur l'élément de contact (200) et permettant la fourniture d'un autre signal de distance sans contact, le capteur de distance (210) et l'autre capteur de distance (212) étant disposés à des extrémités opposées de l'élément de contact (200).

11. Distributeur de boissons automatique (100) qui présente les caractéristiques suivantes :
une sortie (102) réglable en hauteur comportant au moins une buse de sortie (202) permettant de distribuer un liquide ; et
un dispositif de détection (106) selon l'une des revendications précédentes disposé sur la sortie (102).

12. Procédé (400) permettant de reconnaître un récipient (104) et un jet de liquide à l'aide d'un dispositif de détection (106) selon l'une des revendications 1 à 10 précédentes, dans lequel le procédé (400) comprend les étapes suivantes :
émission (402) d'un faisceau de mesure (302), réception d'une réflexion du faisceau de mesure (302) et détermination d'un signal de distance à partir d'une durée de fonctionnement du faisceau de mesure (302) à l'aide du capteur de distance (210) ;
mise en œuvre (404) d'une comparaison entre une valeur de distance représentée par le signal de distance et une valeur de seuil ; et
fourniture (406) d'un signal de récipient indiquant la présence d'un récipient (104) et/ou d'un signal de sortie, indiquant un jet de liquide déchargé de la buse de sortie (202), en fonction d'un résultat de la comparaison.
